(19) Europäisches Patentamt
European Patent Office
Office européen des brevets

(11) **EP 4 332 848 A1**

(12) **EUROPEAN PATENT APPLICATION**

(43) Date of publication:
**06.03.2024 Bulletin 2024/10**

(21) Application number: **23190936.7**

(22) Date of filing: **10.08.2023**

(51) International Patent Classification (IPC):
***G06N 20/00*** (2019.01)     ***G06N 3/0455*** (2023.01)
***G06F 21/60*** (2013.01)

(52) Cooperative Patent Classification (CPC):
**G06N 20/00; G06N 3/02; G06N 3/098;** G06F 21/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 US 202263371334 P
16.09.2022 US 202263375984 P
28.03.2023 US 202318191583**

(71) Applicant: **Devron Corporation
New York, NY 10005 (US)**

(72) Inventors:
• **WAGH, Sameer
New York, 10005 (US)**
• **CHOPRA, Kartik
New York, 10005 (US)**
• **ROY, Sidhartha
New York, 10005 (US)**
• **PATHAK, Shashank
New York, 10005 (US)**
• **SINGH, Nanaki Kuljot
New York, 10005 (US)**

(74) Representative: **Mewburn Ellis LLP
Aurora Building
Counterslip
Bristol BS1 6BX (GB)**

(54) **FEDERATED LEARNING PLATFORM AND METHODS FOR USING SAME**

(57)     Provided herein are systems and methods for federated machine learning performed by a central system communicatively coupled to plurality of satellite systems that implement privacy-preserving techniques. Synthetic data generated at respective satellite systems based on the actual data of the satellite systems can be utilized to generate data processing rules that can be applied to the actual data and used to develop a central machine learning model. The systems and methods disclosed herein can be used for both horizontal or vertical federated machine learning by implementing an alignment algorithm as necessary. Insights based on synthetic data and/or the alignment algorithm can be used to develop a central machine learning model without accessing any actual data values directly. Local models can be generated by training the central machine learning model at respective satellite sites and then aggregated at the central system, without transmitting the actual data from the respective satellite systems.

FIG. 1

**EP 4 332 848 A1**

## Description

## CROSS-REFERENCE TO RELATED APPLICATIONS

This application claims priority to U.S. Provisional Application No. 63/371,334, filed August 12, 2022, U.S. Provisional Application No. 63/375,984, filed September 16, 2022, and U.S. Application No. 18/191,583, filed March 28, 2023 the entire contents of each of which are incorporated herein by reference.

## FIELD

The present disclosure relates generally to federated machine learning, and more specifically to federated machine learning methodologies implementing privacy preserving technologies.

## BACKGROUND

Federated machine learning is a machine learning technique that enables the development of machine learning models based on training data that is not stored in a centralized location. Instead, the machine learning model is trained via a machine learning algorithm based on data that is distributed across multiple federated devices.

## SUMMARY

As stated above, federated learning enables global machine learning models to be trained based on data that is distributed across multiple federated devices. Using federated datasets for federated learning implicates two opposing objectives. First, providing enough information about the values of the federated dataset to enable a data scientist to utilize that data for analysis, and second, providing as little information about the values of the federated dataset as possible to preserve data privacy. Privacy preserving techniques are well-suited to hide computation results from the data scientist. In practice, however, data scientists often perform data analytics in a trial-and-error manner, tuning and adjusting parameters as necessary, creating a need for the data scientist to see enough of the data and computations to sufficiently explore the data. Exploratory data analysis is an important step in the machine learning process, wherein the data scientist learns the type and distribution of data available, performs data clean-up and preprocessing steps and feature engineering, etc. Thus, there is a need for systems and methods for building and training federated machine learning models with federated datasets that implement privacy enhancing technologies while still providing meaningful information about the actual data of the satellite systems. Accordingly, disclosed herein are systems and methods that may address the above-identified need.

Disclosed herein are methods and systems for building and training a central machine learning model based on data distributed across various different satellite systems without directly accessing the actual data stored at those systems. In one or more examples, central machine learning models can be developed based on synthetic data that was generated based on actual data stored at a plurality of satellite systems. The central machine learning model can be iteratively trained locally at each satellite system (e.g., to generate a local update for each satellite system) and then updated at the central system by applying an averaging algorithm to an aggregation of local updates received from the satellite systems.

The systems and methods disclosed herein can be applied to homogenous datasets (e.g., where the satellite systems store data according to a uniform schema) or to heterogeneous datasets (e.g., where the satellite systems store data according to different schemas) by implementing an alignment algorithm that relies on encrypted data values and a key management system that manages the decryption process. In one or more examples, the systems and methods disclosed herein can implement additional privacy-preserving techniques such as independent virtual private clouds (VPCs), custom privacy specifications for each satellite system with respect to personally identifiable information (PII) and/or synthetic data generation, secure communication and computation protocols, etc. By implementing privacy-preserving techniques the systems and methods disclosed herein enable federated machine learning using data that is distributed across multiple distributed satellite systems without exposing the actual data of the satellite systems.

In one or more examples, a computer-implemented method for developing a central machine learning model can be performed by a central system communicatively coupled to a plurality of satellite systems and can include: receiving, at the central system, a plurality of synthetic data samples from respective satellite systems of the plurality of satellite systems, wherein each of the plurality of synthetic data samples is based on an actual data sample of the respective satellite system, generating one or more processing rules based on the synthetic data samples, and developing a central machine learning model based on the one or more processing rules. The method can also comprise: transmitting the central machine learning model to the plurality of satellite systems, receiving a plurality of updated data values from respective satellite systems of the plurality of satellite systems, wherein the plurality of updated data values were generated from training the central machine learning model using the actual data samples of the plurality of satellite systems, aggregating the plurality of updated data values to generate a central update, and updating the central machine learning model based on the central update. In some examples, aggregating the plurality of updated data values can comprise applying one or more federated averaging algorithms to the updated data values.

In one or more examples, the method can comprise training the updated central machine learning model on a testing data set of the central system. In some examples, the plurality of satellite systems can store actual data samples according to a uniform data schema. Alternatively, the plurality of satellite systems can store data samples according to different data schemas.

In some examples, the method can comprise transmitting an encryption pipeline to the plurality of satellite systems, receiving, at the central system, a plurality of encrypted data samples from respective satellite systems of the plurality of satellite systems, wherein each of the plurality of encrypted data values was encrypted by the respective satellite system in accordance with the encryption pipeline, applying a transformation to each of the plurality of encrypted data samples to generate a plurality of transformed data samples, identifying one or more entities of a particular type in the plurality of transformed data samples, generating a set of location indices based on the identified one or more entities of the particular type, and developing the central machine learning model based on the generated set of location indices. Applying the transformation to each of the plurality of encrypted data samples can comprise: obtaining a unique transformation key corresponding to respective satellite systems of the plurality of satellite systems, and applying the unique transformation key corresponding to the respective satellite system to encrypted data samples of the respective satellite system.

In one or more examples, the method can include transmitting a synthetic data generation pipeline to the plurality of satellite systems, wherein the synthetic data generation pipeline comprises instructions for respective satellite systems of the plurality of satellite systems to generate synthetic data samples based on actual data associated with the generated set of location indices. The instructions for respective satellite systems of the plurality of satellite systems can be generated, at least in part, based on specifications of the respective satellite system. In some examples, the specifications comprise one or more of a maximum number of synthetic data samples that can be generated, one or more caching mechanisms, and one or more designations of data samples that correspond to personally identifiable information (PII).

In one or more examples, the central system and each of the plurality of satellite systems comprises an independent virtual private cloud (VPC). The central system can be communicatively coupled to the plurality of satellite systems via secure point-to-point communication channels. In some examples, the plurality of received synthetic data samples do not correspond to any actual data samples that correspond to PII.

In one or more examples, a computing system for developing a central machine learning model comprises: a central system communicatively coupled to a plurality of satellite systems, and one or more processors coupled to one or more memory devices, wherein the one or more memory devices include instructions which when executed by the one or more processors cause the system to: receive, at the central system, a plurality of synthetic data samples from respective satellite systems of the plurality of satellite systems, wherein each of the plurality of synthetic data samples is based on an actual data sample of the respective satellite system, generate one or more processing rules based on the synthetic data samples, and develop a central machine learning model based on the one or more processing rules.

In one or more examples, a non-transitory computer-readable medium stores instructions that, when executed by one or more processors of a system comprising a central system communicatively coupled to a plurality of satellite systems, cause the device to: receive, at the central system, a plurality of synthetic data samples from respective satellite systems of the plurality of satellite systems, wherein each of the plurality of synthetic data samples is based on an actual data sample of the respective satellite system, generate one or more processing rules based on the synthetic data samples, and develop a central machine learning model based on the one or more processing rules.

In one or more examples, a computer-implemented method for federated machine learning can be performed by a satellite system communicatively coupled to a central system that is communicatively coupled to a plurality of satellite systems, and can comprise: generating, at the satellite system, a plurality of synthetic data samples based on actual data samples of the satellite system, transmitting the plurality of synthetic data samples to the central system, receiving, from the central system, a central machine learning model, wherein the central machine learning model is generated based at least in part on the plurality of synthetic data samples, training the central machine learning model using actual data samples of the satellite system to generate a local update, and transmitting the local update to the central system.

The method can include encrypting the local update before transmitting the local update to the central system. In some examples, the plurality of satellite systems can store data samples according to a uniform data schema. Alternatively, the plurality of satellite systems can store data samples according to different data schemas.

In one or more examples, the method can include: receiving, at the satellite system, an encryption pipeline from the central system, wherein the encryption pipeline comprises encryption instructions, generating a plurality of encrypted data samples based on actual data samples of the satellite system in accordance with the encryption instructions, and transmitting the plurality of encrypted data samples to the central system. The method can also include storing, at the satellite system, a reverse mapping of the plurality of encrypted data samples.

In one or more examples, the method can include: receiving, at the satellite system, a synthetic data generation pipeline, wherein the synthetic data generation pipeline comprises instructions to generate synthetic data samples based on data associated with a set of location indices generated, at least in part, on the plurality of encrypted data samples, and generating the plurality of synthetic data samples in accordance with the instructions. The instructions for respective satellite systems of the plurality of satellite systems can be generated, at least in part, based on specifications of the respective satellite system. The specifications can comprise one or more of a maximum number of synthetic data samples that can be generated, one or more caching mechanisms, and one or more designations of data samples that correspond to personally identifiable information (PII).

In one or more examples, the central system and each of the plurality of satellite systems comprises an independent virtual private cloud (VPC). The central system can be communicatively coupled to the plurality of satellite systems via secure point-to-point communication channels. In some examples, the plurality of received synthetic data samples do not correspond to any actual data samples that correspond to PII.

In one or more examples a computing system for federated machine learning comprises: a satellite system communicatively coupled to a central system that is communicatively coupled to a plurality of satellite systems, and one or more processors coupled to one or more memory devices, wherein the one or more memory devices include instructions which when executed by the one or more processors cause the system to: generate, at the satellite system, a plurality of synthetic data samples based on actual data samples of the satellite system, transmit the plurality of synthetic data samples to the central system, receive, from the central system, a central machine learning model, wherein the central machine learning model is generated based at least in part on the plurality of synthetic data samples, train the central machine learning model using actual data samples of the satellite system to generate a local update, and transmit the local update to the central system.

In one or more examples, a non-transitory computer-readable medium stores instructions that, when executed by one or more processors of a system comprising a satellite system communicatively coupled to a central system that is communicatively coupled to a plurality of satellite systems, cause the system to: generate, at the satellite system, a plurality of synthetic data samples based on actual data samples of the satellite system, transmit the plurality of synthetic data samples to the central system, receive, from the central system, a central machine learning model, wherein the central machine learning model is generated based at least in part on the plurality of synthetic data samples, train the central machine learning model using actual data samples of the satellite system to generate a local update, and transmit the local update to the central system.

Additional advantages will be readily apparent to those skilled in the art from the following detailed description. The aspects and descriptions herein are to be regarded as illustrative in nature and not restrictive.

All publications, including patent documents, scientific articles and databases, referred to in this application are incorporated by reference in their entirety for all purposes to the same extent as if each individual publication were individually incorporated by reference. If a definition set forth herein is contrary to or otherwise inconsistent with a definition set forth in the patents, applications, published applications and other publications that are herein incorporated by reference, the definition set forth herein prevails over the definition that is incorporated herein by reference.

## BRIEF DESCRIPTION OF THE FIGURES

Various aspects of the disclosed methods and systems are set forth with particularity in the appended claims. A better understanding of the features and advantages of the disclosed methods and systems will be obtained by reference to the following detailed description of illustrative embodiments and the accompanying drawings, of which:

FIG. 1 depicts an exemplary system for federated machine learning, in accordance with one or more examples of the present disclosure;

FIG. 2 depicts an exemplary method for federated machine learning as performed by a central system, in accordance with one or more examples of the present disclosure;

FIG. 3 depicts an exemplary method for federated machine learning as performed by a satellite system, in accordance with one or more examples of the present disclosure;

FIG. 4 depicts an exemplary method for developing a central federated machine learning model, in accordance with one or more examples of the present disclosure;

FIG. 5 depicts an exemplary method for executing a central federated machine learning model at remote satellite systems, in accordance with one or more examples of the present disclosure; and

FIG. 6 depicts an exemplary computing device, in accordance with one or more examples of the present disclosure.

## DETAILED DESCRIPTION

Described herein are methods and systems for building and training a central machine learning model based on data distributed across various different satellite systems without directly accessing the actual data stored at those systems.

In one or more examples, respective satellite systems can generate synthetic data samples based on actual data samples of the satellite system. The synthetic data samples can be generated in response to receiving a synthetic data generation pipeline from the central system that contains executable instructions that when executed by a processor of the satellite system generate synthetic data samples based on the actual data samples of the satellite system.

The synthetic data samples can be received at the central system and then provided to a data scientist. The data scientist can utilize the synthetic data samples to explore the data of the plurality of satellite systems, to test data processing steps, such as feature engineering, and to generate data processing rules that can be applied to the actual data samples of the satellite systems. In one or more examples, the data processing rules generated while exploring the synthetic data samples can be used to develop a central machine learning model.

Where the satellite systems contain data stored according to different data schemas relative to one another, the central system can execute an alignment algorithm. In one or more examples, the central system can transmit an encryption pipeline to the satellite systems, which can be executed to generate a plurality of encrypted values that are then sent to the central system. A data scientist can transform the encrypted values using a plurality of transformation keys supplied by a key management system to enable query-based searching to identify location indices of matching data types across the distributed data sets from the satellite systems. In one or more examples, the location indices identified by executing the encryption algorithm can be used to specify particular values for the synthetic data generation pipeline. That is, the synthetic data generation pipeline can include instructions for the satellite systems to access actual data located at the location indices indicated and to generate synthetic data based on those actual data values. In one or more examples, the location indices of the matching data values can be used to develop the central machine learning model.

After developing the central machine learning model, the central machine learning model can be executed. In one or more examples, executing the central machine learning model can include first transmitting the central machine learning model to satellite systems. The central machine learning model can be transmitted to the satellite systems in the form of a machine learning pipeline containing instructions that when executed at the satellite systems cause the satellite systems to train the central machine learning model on the actual data of the satellite system to generate a local update. The local updates generated at the satellite systems can be transmitted to the central system and aggregated using a variety of federated averaging algorithms to generate a central update used to update the central machine learning model.

The system for implementing the above machine learning processes can implement a variety of privacy-preserving techniques such as secure data communication protocols, separate virtual private clouds (VPCs), strict encryption rules, custom encryption specifications set by data owners of the satellite systems, digital barriers to create trust boundaries between components of the system and users of the system (such as the data scientist), the synthetic data generation and encryption pipelines discussed above, etc. As a result, the systems and methods disclosed herein for federated machine learning implement a variety of privacy-preserving techniques that maximize the privacy and security of the actual data of the satellite systems while still enabling robust federated machine learning methodologies using that data.

The following description is presented to enable a person of ordinary skill in the art to make and use the various embodiments. Descriptions of specific devices, techniques, and applications are provided only as examples. Various modifications to the examples described herein will be readily apparent to those of ordinary skill in the art, and the general principles defined herein may be applied to other examples and applications without departing from the spirit and scope of the various embodiments. Thus, the various embodiments are not intended to be limited to the examples described herein and shown, but are accorded the scope consistent with the claims.

### Model Building System

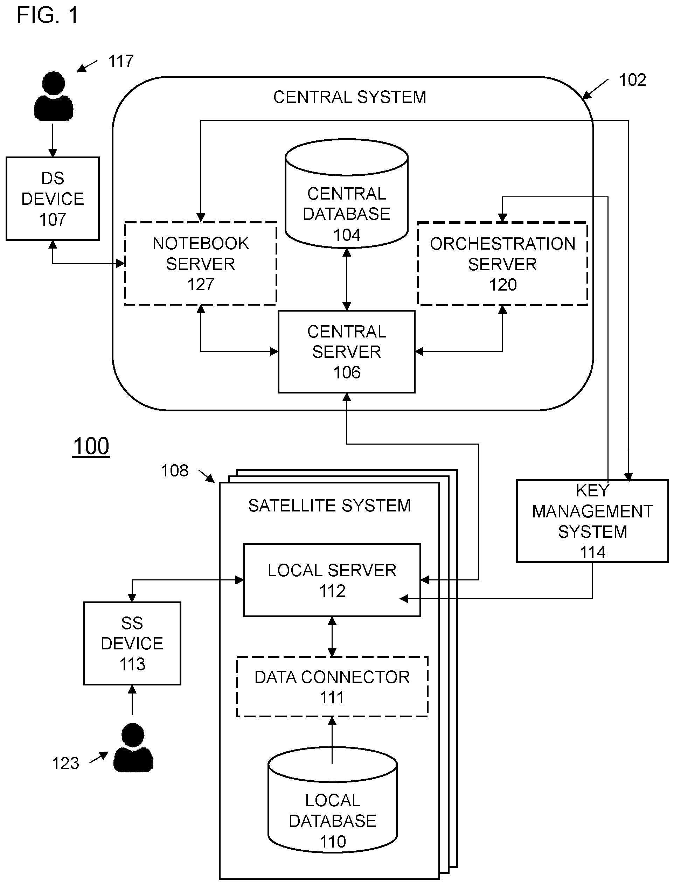

**FIG. 1** illustrates a system 100 for federated machine learning, according to one or more examples. As shown, system 100 may include central system 102, a plurality of satellite systems 108, and a key management system 114. As described in detail herein, central system 102 may be configured to communicate (e.g., by one or more wired or wireless network communication protocols and/or interface(s)) with the plurality of satellite systems 108 in order to exchange information to build and train a machine learning model. In some embodiments, machine learning models as described herein may be configured to perform supervised learning tasks and/or unsupervised learning tasks, and the models may include neural networks, encoder-decoder models, random forest based models, and/or any other suitable machine learning model type.

Central system 102 may include any computerized system configured to communicate with a plurality of satellite systems 108 and to execute one or more processes to build and train a machine learning model, generate synthetic data representative of satellite data sets, and/or execute one or more alignment algorithms to process data of the satellite systems 108. Central system 102 may include any suitable computer storage medium, such as central database 104, configured to store artifacts, local data sets, and/or other data usable to train and build machine learning models as described herein. Central system 102 may include one or more processors, such as central server 106. The central server 106 can store intermediate computation results from each round of training of the central machine learning model, and/or other related data such as models, parameters, statistics, etc. In one or more examples, central system 102 can include a plurality of separate servers. For instance, in addition to central server 106, central system 102 can include an orchestration server 120 and/or a notebook server 127. Optionally, the central system 102 may include only the central server 106, which may perform all functionalities of the servers of the central system 102 (e.g., perform the functionalities of the orchestration server 120 and/or notebook server 127).

The notebook server 127 can act as the point of contact for a data scientist 117 to interact with the federated machine learning process executed via the central system 102. For instance, the data scientist 117 can interact with an application programming interface (API) via a data scientist (DS) device 107. In one or more examples, the data scientist 117 can utilize a Jupyter Notebook or other application that provides access to an API associated with the central system 102. The data scientist 117 can utilize the DS device 107 to submit jobs to the central system 102 via the notebook server 127. As used herein, a job is a component of a workflow submitted by a user, such as a data scientist. A run, or a run id, is a pointer to an executed job. To preserve privacy of job outputs, the notebook server 127 can be configured such it can only read meta-data and job outputs from the central server 106.

In one or more examples, system 100 is configured such that the data scientist 117 interacts with job outputs only via run ids (for example, rather than viewing the data output, utilizing the job output (like a pointer to an object) for another purpose, akin to encapsulation from object oriented programming techniques). As will be discussed below, system 100 can implement the technique of get methods to enable the data scientist 117 to retrieve the output of specific function calls. For example, knowing the data schema of satellite system databases is important so the data scientist 117 can design the machine learning model appropriately, and thus the data scientist 117 may be able to use get methods to return the data schema of the satellite systems upon executing a job for such purpose.

The orchestration server 120 facilitates advanced computation and complex federated machine learning processes. The orchestration server 120 can coordinate and manage the machine learning process implemented by the central system 102. In one or more examples, the orchestration server 120 can generate one or more ML pipelines to automate the machine learning process. As used herein, a pipeline refers to an independently executable workflow of a specific machine learning task, and may contain instructions for completing the specific machine learning task that can be executed. Exemplary pipelines that may be generated by the orchestration server 120 include a synthetic data generation pipeline, an encryption pipeline, etc.

By including separate servers, the central system 102 can implement a digital barrier (e.g., a trust boundary) between locations where data is stored during the machine learning process, which can improve the data security of the process. For instance, separating the central server 106, which can store the intermediate computation results from training the machine learning model on data of the satellite systems 108, from the notebook server 127 that the data scientist 117 interacts with institutes a privacy-preserving digital barrier that separates the data scientist 117 from the computation results.

The plurality of satellite systems 108 each may include any computerized system configured to communicate with central system 102 to build and train a machine learning model in conjunction with central system 102. As shown, a satellite system 108 may include a respective set of one or more processors, such as local server 112. Additionally, a satellite system 108 may include a respective computer storage medium, such as local database 110, configured to store local data usable to train and build machine learning models as described herein. Each satellite system 108 can include a data connector 111 that connects the local database 110 with the local server 112.

The local server 112 can execute instructions received from the central server 106 to perform various machine learning computations using actual data stored in the local database 110. The local server 112 can also store intermediate computation results from each round of training of the machine learning model as well as other satellite-specific keys, data shuffles, cryptographic mappings, etc. In one or more examples, the local server 112 is communicatively connected such that the local server 112 can both transmit data to and receive data from the central server 106, the key management system 114, the SS device 113, and the data connector 111.

The data connector 111 acts as the connection point between the local server 112 and the local database 110, digitally separating the local server 112 from the local database 110. The data connector 111 can be configured to interface with databases of the satellite systems 108 such as the local database 110 regardless of database size, beneficially enabling the system 100 to perform federated machine learning computations regardless of data sizes between satellite systems 108.

The local database 110 of each satellite site 108 stores data according to a data schema. As used herein, a data schema corresponds to the organization and structure of a database of information. In one or more examples, the data schema of a first satellite system 108 differs from the data schema of a second satellite system 108. When the system 100 includes satellite systems 108 that store data according to differing data schema, the central server 106 cannot generate a horizontal federated learning model and must instead rely on vertical federated learning and implement an alignment routine to identify related data values (e.g., data values corresponding to a common entity) between datasets. Optionally, the local database 110 of each satellite system 108 stores data in one or more tables. A table can include data records tabulated in the rows of the table, with each row containing a data record corresponding to an entity, and columns corresponding to data categories or attributes of the entity. For example, a data record in a row of a table may correspond to a person named John Doe. The columns of the table may include certain attributes such as "Name," "Address," and "Profession," for each entity.

Optionally, a satellite system 108 can include a satellite system (SS) device 113 for a user 123 to participate in building a global machine learning model. In one or more examples, the SS device 113 can provide a privacy portal for the user 123 to specify one or more custom privacy specifications of the satellite system 108. For example, the user 123 may specify the minimum job size run, cryptographic key sizes, the number of synthetic data samples that may be generated based on data stored in the local database 110, one or more caching mechanisms, designate certain data values or categories of values as containing personally identifiable information (PII), specify that certain data values of data stored in the local database 110 should remain private and not be utilized for federated machine learning or be encrypted, etc.

In FIG. 1, detailed components of one exemplary satellite system 108 are shown, though it should be understood that any one or more of the plurality of satellite systems 108 may include the same or similar corresponding components. In some embodiments, system 100 may be configured such that a satellite system 108 can be connected to and disconnected from central system 102, for example in response to a user instruction or automatically in response to one or more trigger conditions, together with or independently from one or more of the other satellite systems 108.

In some embodiments, satellite systems 108 can be distributed across multiple geographic locations, multiple different organizations, and/or multiple departments within the same organization. In some embodiments, satellite systems may be located geographically proximate to one another (including, even, by being provided as a part of the same computer system) while being communicatively demarcated from one another (e.g., such that they cannot communicate directly with one another). In some embodiments, local server 112 may include a cloud-based server and/or a bare-metal server.

The key management system 114 manages the cryptographic aspects of the machine learning process. The key management system 114 is communicatively connected to the notebook server 127 such that it can receive job initiation requests, such as jobs being designed by the data scientist 117 via the DS device 107. The key management system 114 stores a plurality of transformation and encryption keys and communicates those keys to the appropriate processors. The key management system 114 is communicatively connected to the local server 112 of the satellite sites 108 and to the orchestration server 120 of the central system 102. Upon receiving a job request from the notebook server 127, the key management system 114 can communicate the required keys to execute that job to the necessary processing devices, as will be discussed below.

In one or more examples, each of the central system 102, the key management system 114, and each satellite system 108 can utilize an independent virtual private cloud (VPC). Utilizing independent VPCs for each component of system 100 provides increased security for the information stored at each of those components by enacting a digital barrier and trust boundary between them. Each component of system 100 can implement authentication barriers, firewalls, and strong network security policies such that only authenticated individuals (for instance by supplying appropriate credentials) can interact with components of the system 100. In one or more examples, the data scientist 117 and/or the user 123 must input credentials supplied by an identity access system (such as Amazon Cognito) to access system 100, which can eliminate the need for shared credentials and control permission access such that users 123 and/or data scientist 117 have access only to the necessary aspects of system 100 (e.g., control with principle of least privilege).

Additionally, secure data transmission protocols can be implemented between each of the central system 102, the key management system 114, and each satellite system 108. For instance, secure point-to-point communication channels can connect each of the components (as indicated by the arrows of FIG. 1), which can encrypt all data in transit between components. System 100 can be configured such that each satellite system 108 of a plurality of satellite systems is communicatively connected only to a local device (e.g., SS device 113), the central system 102, and the key management system 114. Accordingly, the individual satellite systems 108 may not be connected to one another in any way.

As noted above, the system 100 can be utilized to generate and execute a central federated machine learning model using a central system 102 in communication with the satellite systems 108. A data scientist of the central system, such as the data scientist 117, can design jobs and submit those jobs to the satellite systems through a job pipeline, which includes instructions that can be executed by a processing device, such as the local server 112 of the satellite system 108 to perform the job computations on the actual data stored in the local database 110 of the satellite system 108. In one or more examples, a job can contain a hierarchy of runs. For instance, a model training job can include a Parent run, which aggregates and averages local updates received from satellite systems, with a number of Child runs where the training of the model occurs (e.g., the local training runs at each satellite system).

When data scientist 117 submits a job, one or more processing devices of the central system 102 (e.g., one or more of notebook server 127, orchestration server 120, and central server 106) can validate that job before transmitting it to the satellite systems 108. If a satellite system 108 receives a job request that is not validated, the satellite system 108 may ignore the request. Upon receiving a validated job request, the satellite system 108 can run the job (such as via the local server 112 as discussed above) on the actual data stored in the local database 110. The job output can then be stored in the local server 112. Some or all of the job output (such as intermediate computation variables, meta-data, statistics, etc.) can then be transmitted to central server 106, with such results extracted by the data scientist 117 using get methods.

The job pipeline that can be implemented to build and train central machine learning models using system 100 can implement privacy preserving data processing stipulations. For instance, system 100 can be configured such that raw data (e.g., the actual data values) stored in satellite systems never leaves the VPC of the respective satellite system. Instead, the information transmitted (e.g., the output of a valid job) is a processed version of the actual data. In any scenario, the processing implemented by executing a job cannot increase the information content of the output. For example, consider three variables, (X, Y, and Z) that form a Markov chain represented by $(X \rightarrow Y \rightarrow Z)$, wherein Z is derived from Y, and Y is derived from X (making X and Z conditionally independent, given Y). Accordingly, the mutual information of X, Y, denoted by $I(X;Y)$ is always greater than or equal to the mutual information of X and Z, denoted by $I(X; Z)$ as shown by the following mutual information relationship:

$$I(X;Y) \geq I(X;Z)$$

As will be discussed below, an exemplary job flow using system 100 can rely on four data types: (1) raw data stored in the local database 110 of each satellite system (denoted by $X_1$), (2) processed data stored in the local server 112 of each satellite system (denoted by $X_2$), (3) processed data stored at the central server 106 of the central system 102 (denoted by $X_3$), and (4) the processed data visible to the data scientist 117 (denoted by $X_4$). These variables form a Markov chain as follows: $X_1 \rightarrow X_2 \rightarrow X_3 \rightarrow X_4$, which results in the following mutual information relationships:

$$I(X_2;X_3) \geq I(X_1;X_3)$$

$$I(X_2;X_3) \geq I(X_1;X_4)$$

The above mutual information relationships can be restated as follows: the maximum mutual information (e.g., the information leakage) between the information between the seen by the data analyst and the raw data (e.g., $I(X_1;X_4)$) cannot be more than the strongest of any of the intermediate links in the Markov chain (e.g., cannot be more than the mutual information between the processed information stored locally at the satellite system (Xz) and the processed information stored at the central system ($X_3$).

### Machine Learning Methodologies

Federated machine learning methodologies can be considered to contain two major data science steps: (1) model development, (2) model execution. During the model development stage, the data scientist explores the data and applies pre-processing and feature engineering as necessary. With federated and private datasets, the data scientist generally does not have access to the actual data (such as the data stored in local databases 110 of the satellite systems 108). To provide meaningful information about the actual data of the satellite systems, the methods disclosed herein can include a synthetic data pipeline that when executed at the satellite systems generates synthetic data that is similar to the actual data of the satellite system, but is not the actual data. The synthetic data may be similar to the actual data by containing a similar mathematical distribution. For example, if a dataset is a demographic dataset of individuals in the United States, a data category can be "height," and the distribution of the data values in this data category can be gaussian with an average height of 6 feet and a variance of 1 foot. A synthetic dataset generated based on this dataset could include synthetic data values that have the same distribution, namely a gaussian distribution with an average of 6 feet with a variance of 1 foot. The model execution stage can generally include three major steps: local training, aggregation, and global training, as will be discussed below.

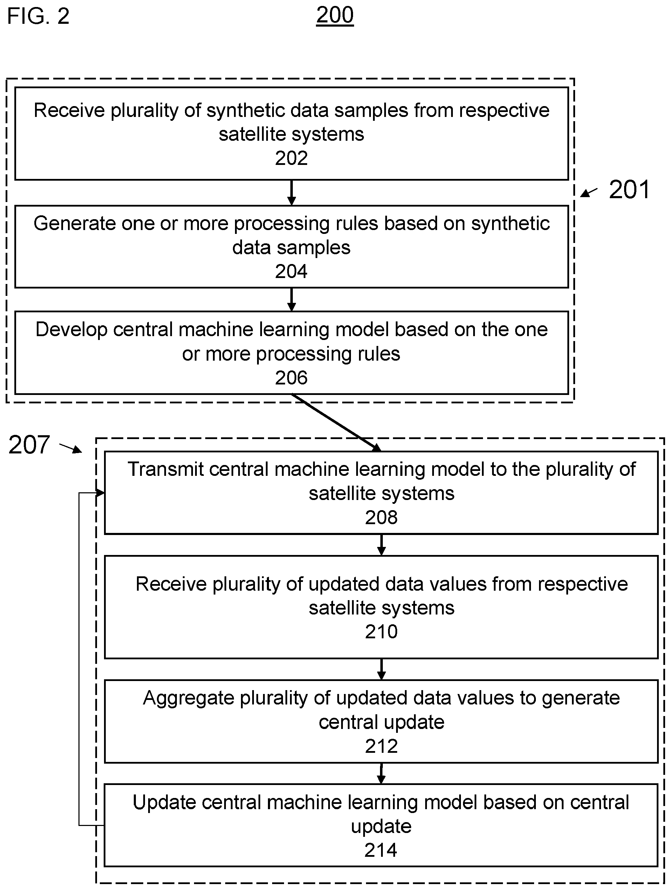

FIG. 2 depicts an exemplary method 200 for federated machine learning as performed by a central system, in accordance with one or more examples of the present disclosure. The method 200 can be implemented using a system for federated machine learning, such as the system 100 of FIG. 1, that includes a central system communicatively connected to a plurality of satellite systems. In one or more examples, the method 200 can be considered to include a model development stage, denoted by the box 201, which can contain steps 202, 204, and 206, and a model execution stage, denoted by the box 207, which can contain steps 208, 210, 212, and 214.

In one or more examples, method 200 begins at step 202, wherein a plurality of synthetic data samples are received from respective satellite systems. The synthetic data samples received at step 202 can be received in response to transmitting a synthetic data generation pipeline to the plurality of satellite systems. For instance, the central system can transmit a synthetic data generation pipeline containing executable instructions that when executed by a processor of the satellite systems will generate synthetic data samples based on actual data samples stored at the respective satellite system.

Upon receiving the synthetic data samples at step 202, the method 200 can move to step 204, wherein one or more processing rules are generated based on the synthetic data samples. As noted above, when preserving the privacy of actual data of the satellite systems, the data scientist of the central system does not have access to actual data values of the satellite systems. However, the synthetic data generated at step 202 can act as a meaningful proxy that enables the data scientist to test pre-processing transformations and feature engineering on data that is similar to the actual data without viewing or manipulating the actual data in order to determine which processing rules should be applied to the actual data. Accordingly, the analysis and actions the data scientist performs using the synthetic data can be applied to the actual data. For instance, if the data scientist performs a particular type of feature engineering on the synthetic data, that feature engineering can be saved as a processing rule that will be applied to the actual data, such as by including executable instructions to perform that feature engineering in a machine learning pipeline transmitted to the satellite systems. In one or more examples, in addition to receiving synthetic data at step 202, other information such as the distribution of target variables, the support of any given data category and/or data value, and statistical information about the actual data can also be extracted and received at step 202 and used to generate processing rules that will be applied to the actual data. Exemplary processing rules can include conversion of a string or categorical variable into numerical values, one hot encoding, scaling and normalizing values, extracting multiple data categories from a single data category using regex parsing, etc.

After generating processing rules at step 204, the method 200 can move to step 206, wherein a central machine learning model is developed based on the processing rules generated at step 204. As noted above, the processing rules generated with respect to the synthetic data can be saved and incorporated into instructions that will be executed using the actual data of the satellite systems by including such instructions in a central machine learning model. Thus, at step 206, when developing the central machine learning model based on the processing rules generated at step 204, the insights and analytics decisions made by the data scientist can be used to design the central machine learning model and included in the instructions for executing the machine learning model at the satellite systems.

In scenarios where the satellite systems do not store data according to a uniform schema (implicating vertical machine learning on heterogeneous data sets), a data alignment algorithm can be utilized as part of the model development stage 201 of method 200. For instance, U.S. Application No. 63/371,334, which is hereby incorporated by reference, describes various methods for vertical federated machine learning in a privacy-preserving manner that enable a data scientist to identify common elements across distributed datasets.

When implementing method 200 using a vertical machine learning methodology, the method 200 can include an additional alignment algorithm that includes: (1) a local transformation and encryption step, and (2) a non-private alignment step. During the local transformation and encryption step, the central system can transmit an encryption pipeline to the satellite systems that includes executable instructions that when executed by respective satellite systems generate encrypted data values corresponding to actual data values of the satellite system. The encryption pipeline can include information generated by a key management system (KMS) (such as the key management system 114 of FIG. 1). In one or more examples, the KMS generates a pair of numbers, $(n, e)$ that make up the public key of the system, generate a plurality of private keys using pseudorandom generator (PRG), that are each shared with the individual satellite systems, and generate one global key (e.g., the global nonce) using a PRG. The KMS may transmit instructions to the satellite systems to use the public key $(n,e)$ along with the global nonce and pairwise blinding to encrypt a unique dataset associated with local data of the satellite system and to store that unique encrypted dataset locally and/or a reverse mapping (such as in the local server 112) before transmitting the encrypted data samples to the central authority.

During the non-private alignment step, the central system applies a transformation to the encrypted data samples received from the satellite systems. In one or more examples, the central system applies the following transformation key to each encrypted data sample: $Enc(r \cdot r_i^{-1})$, using a private random value $r$ generated by the KMS to transform the local blindings $r_i$. Once the transformation keys are applied to the encrypted data samples, the encryptions from different satellite systems (using unique local blindings) can appear in a common format (e.g., as if they were transformed using the same transformation key) which can enable equality checks between different encryptions.

After transforming the encrypted data samples, the central system can identify entities of a particular type (e.g., matching entities) between data samples of different satellite systems. In one or more examples, the central system can utilize a cleartext list matching algorithm to identify matching data samples and to identify location indices where those matching values are located. The location indices can then be used to develop the machine learning model, as they indicate where, across data sets from distributed satellite systems, related values are located. Optionally, the synthetic data samples received at step 202 may be based on the location indices. For example, the central system can include instructions in the synthetic data generation pipeline that instructs the satellite system to generate synthetic data samples using actual data samples associated with the location indices.

In one or more examples, the location indices identified can be used in conjunction with distributed structure query language (SQL) analytics while exploring the data sets during the model development stage 201 of method 200. More specifically, the insights gained by executing the data alignment pipeline and applying distributed SQL analytics can be used to generate the processing rules at step 204, which are used to develop the machine learning model at step 206.

Applying distributed SQL analytics can involve executing an SQL query when the tables and datasets are split in multiple locations (e.g., to enable distributed SQL querying). SQL is a domain-specific language used for managing and querying relational data. More specifically, SQL enables a data scientist to query multiple datasets for relevant information that is spread across those datasets. For instance, a first dataset may contain financial information about a number of individuals, and a second dataset may contain demographic information about at least some of the same individuals as the first dataset. Executing an SQL query could thus include identifying the average income from the first dataset, for individuals from a particular country. In order to return this query, the datasets typically must be joined, so that the income values of the first dataset can be matched up based on the country of the individual tabulated in the second dataset. When executing a privacy-preserving federated learning model, however, joining the datasets is not feasible. Accordingly, executing an SQL query can include generating sub-queries that can be run individually at each satellite site. The sub-queries may be generated after identifying related data values (e.g., identifying indices of a first dataset at a first satellite site that correspond to certain indices of a second dataset at a second satellite site), and may include instructions to access data associated with the indices of the respective satellite site that were determined to correspond to another satellite site.

Executing the SQL query can involve identifying the number of satellite systems (e.g., the number of datasets), checking the validity of the query (e.g., checking for syntactic validity of the SQL, checking for schema matching among the datasets, ensuring the query reveals only aggregate information (such as a sum of values, an average of values, the number of values, but not the data values themselves), generating subqueries to be run on individual satellite systems, and/or generating a final aggregation query. This process enables both single satellite and multi-satellite SQL querying. For example, the data scientist could query just Satellite 1 to identify index locations for values above a certain threshold (such as values >21), or the data scientist can query multiple satellites to return indices from Satellite 2 that recite a certain target value and then query Satellite 3 for the values at the indices corresponding to the indices from Satellite 2 matching the target value. The system thus allows the functionality of running complex SQL queries that require joins to be performed without executing the join (which would require data centralization).

Upon completing the model development stage (e.g., upon developing the central machine learning model at step 206), the method 200 can move to step 208, wherein the central machine learning model is transmitted to the plurality of satellite systems. Transmitting the central machine learning model to the satellite systems at step 208 can include transmitting a machine learning pipeline to the satellite systems that includes executable instructions that when executed by the satellite systems cause respective satellite systems to train the model using actual data of the satellite system. In one or more examples, the machine learning pipeline can include a pre-processing run that executes the processing rules (e.g., any feature engineering or data cleanup operations generated at step 204) prior to training the model on actual data (e.g., the local data stored in a local database such as local database 110 of FIG. 1). In one or more examples, the data scientist may designate certain pre-processing algorithms for specific satellite systems that differ from the pre-processing algorithms of other satellite systems. In one or more examples, the data scientist can designate specific machine learning models for a given data set (e.g., for a given satellite system). Exemplary machine learning models that can be used include neural networks, clustering, encoder-decoder models, decision trees, random forests, etc.

After transmitting the central machine learning model to the satellite systems at step 208, the method 200 can move to step 210, wherein a plurality of updated data values are received from the respective satellite systems. The updated values received from the respective satellite systems can represent the local updates from respective satellite systems after training the central machine learning model using the actual data located at the satellite system.

Next, the method 200 can move to step 212, wherein the updated data values are aggregated to generate a central update. In one or more examples, aggregating the updated data values can include applying one or more federated averaging algorithms to the updated data values. In one or more examples, aggregating the updated data values can include generating values and/or statistics based on the updated data values. Optional averaging algorithms that can be utilized include Scaffold and FedDyn, FedAvg, FedSAM, FedProx, MimeLite, etc. In one or more examples (such as when executing a vertical federated learning model) only a fraction of the privatized and updated data values are aggregated at step 212. For instance, only 1% of the updated data samples may be aggregated. Optionally, more than 1% of the updated data samples may be aggregated, such as 5%, 10%, more than 10%, etc. After generating the central update at step 212, the method 200 can move to step 214, wherein the central machine learning model is updated based on the central update.

In one or more examples, the updated central machine learning model can be trained on a dataset of the central system (e.g., a global training phase). Training the updated central machine learning model during a global training phase can include running a number of training epochs on a small amount of data, which can enable the central machine learning model to learn across dataset category correlations and patterns and improve the accuracy of the model. Optionally, during the global training phase, an encoder-decoder model can be trained using the dataset of the central system. In one or more examples, encoder-decoder models are trained on the dataset of the central system and the encoder portion is used to encode the data to a latent space, which provides an additional layer of privacy.

In one or more examples, the central system 102 can include a local dataset and participate in the training process of the model execution stage. For example, the central system can train the central model using the local dataset of the central system while the satellite systems train the central model using their respective data sets. The output (e.g., the local update of the central system) can be treated in the same manner as the outputs received from the satellite systems. For instance, the local update from the central system can be included in the aggregating and averaging steps using the local updates from the satellite systems, and may perform the same pre-processing algorithms or a unique pre-processing algorithm specified by a data scientist of the central system.

In one or more examples, a central model (of the central system) can be trained over predicted labels and encoded data values from the local datasets of the central system (encoded with respect to the origin), and the central model may be executed (trained) by a small fraction of the dataset of the central system (such as between 1% -20%). For example, a local model that generates a prediction value may generate prediction labels based on a small fraction and combined with a similar small fraction from other local models. These small fractions of data from multiple sources can then be utilized to train a global model.

Optionally, the execution stage 207 can be repeated iteratively, as indicated by the arrow connecting step 214 with step 208 to train the machine learning model over a series of epochs. Thus, in one or more examples, after updating the central machine learning model based on the central update at step 214, the method 200 will return to step 208 and transmit the central machine learning model to the plurality of satellite systems for a successive training round.

In one or more examples, training a machine learning model can involve learning from deep feature representations. Deep feature representations can be utilized to describe the data in a dataset according to a logical mathematical pattern that protects the actual data values and makes those data values difficult or impossible to decrypt. For example, a data record may contain a name, salary, age, and currency, with respective data values for each category. In deep feature representation, those data values for each category can be represented numerically by a sequence of real numbers. In the local training phase, local neural networks can be trained using the entire dataset at each satellite system. An alignment routine may be executed to ensure that all relevant target variables (e.g., relevant data values) are present in the datasets of the satellite systems. In the aggregation phase, a small fraction of aligned data values can be selected from each satellite system and forward propagated through the corresponding locally trained neural network models to generate feature maps. The feature maps from each satellite system can then be communicated to a central authority for global training. In the global training phase, the aggregated feature maps from the satellite systems can be concatenated, and a global neural network can be trained on the concatenated feature maps. The global neural network model learns from the representations using a small fraction of the data from the satellite systems. The globally trained model and the locally trained models from the satellite systems can be stacked and served. That is, the globally trained model and one or multiple locally trained models can be "stacked," such that the predictions from those models can be combined and used to generate predictions based on incoming data (e.g., newly added data in the datasets of the satellite systems) in real time.

Training the machine learning model may involve improving predictions by stacking. Stacking generally involves combining the predictions from multiple models and comparing those predictions to generate a relative weighting based on the trustworthiness of the models' predictions compared to one another. Stacking may be an effective training methodology when two groups of satellite systems are involved, such as where the machine learning models are locally trained on a first group of satellite systems containing target variables and data from a second group of satellite systems is used to train an encoder-decoder type of neural network model. In the local training phase for the first group of satellite systems, any kind of machine learning model may be trained using the target variables of the first group of satellite systems. After this local training phase, the predictions generated using a fraction of the aligned data (e.g., the data values identified as corresponding to data values of another dataset at another satellite system) may be communicated to a central authority. In the local training phase for the second group of satellite systems, encoder-decoder models can be trained locally on each satellite system of the second group using the entire dataset of the respective satellite system. After the local encoder-decoder model training, the encoder portion of the model can be separated and used to encode a fraction of the aligned data values (e.g., the data values identified as corresponding to data values of another dataset at another satellite system) from each satellite system of the second group. In the aggregation phase, a small fraction of the aligned data values from the datasets of the satellite systems may be selected, and the data aggregated can include the target variables, the prediction outputs from the locally trained models of the first group of satellite systems, and/or the encoded data values from the second group of satellite systems. The aligned data values may be selected based on a criteria determined by a user. The prediction outputs and the encoded data values may then be concatenated and used for global training. During the global training phase, any kind of machine learning model can be utilized.

Training the machine learning model may involve training using generative networks. During the local training phase, a clustering model can be trained locally on each satellite system. An alignment routine can then be implemented to map out cluster labels across satellite systems. The cluster labels can be generated on the satellite system with the most information (e.g., the greatest number of columns). The cluster labels can be transferred to other satellite systems based on the alignment routine. Generative network models (GANs) can then be locally trained using the datasets of the satellite systems and the cluster labels. The locally trained GANs can be communicated to the central authority, which can synthetically generate data. During the aggregation phase, the locally trained GANs and the cluster labels can be aggregated at the central authority. During the global training phase, the central authority can generate local samples from the GAN corresponding to each satellite system. The cluster labels can be used to appropriately concatenate the local samples, and a global machine learning model can be trained using the concatenated local samples. The cluster labels act as the identifiers that are used to align the data from multiple satellite systems generated by the GAN model. In each satellite system, there may be a few columns of data that remain available for local training. The GAN models from other satellite systems can be used to generate some synthetic data for the non-existing columns. This synthetic data can be aligned with the real data in the satellite system based on the cluster labels and essentials used in an imputer to fill all of the columns.

Training the machine learning model may involve training using imputing methods. During the local training phase, an imputer algorithm can be executed to generate synthetic data for each satellite system and to generate cluster labels. For instance a synthetic data generation pipeline can be transmitted to a plurality of satellite systems that includes instructions to generate synthetic data samples based on actual data of the satellite system. The local imputer models (comprising synthetic data) can then be distributed to other satellite systems. The aggregation phase can be optional when utilizing this methodology. During the global training phase, each satellite system utilizes the imputer models from the other satellite systems to generate the missing features in a single global model (e.g., to populate data values for the other satellite systems). The global model can be trained using the union of all of the synthetic data values of the satellite systems.

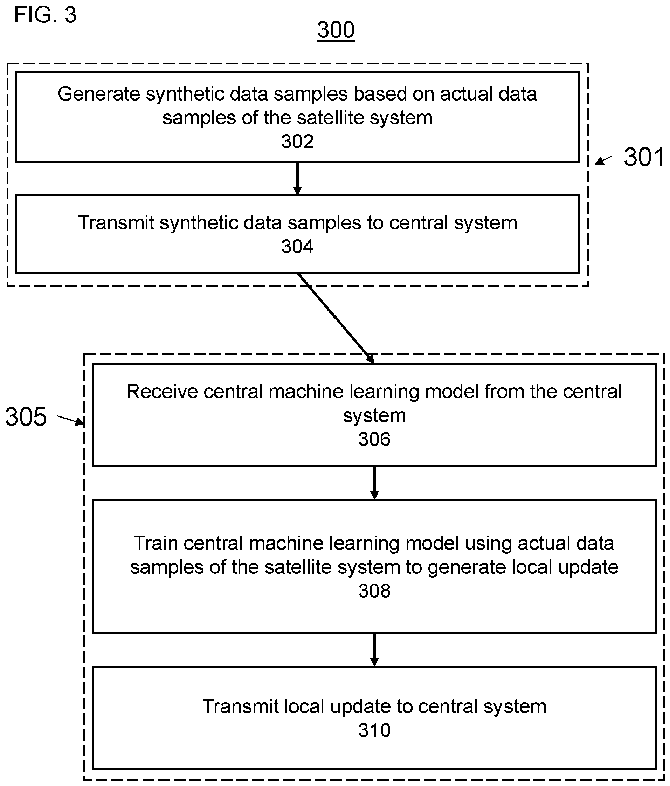

**FIG. 3** depicts an exemplary method for federated machine learning as performed by a satellite system, in accordance with one or more examples of the present disclosure. Method 300 can be performed by a system for federated machine learning, such as the system 100 of FIG. 1, that includes a central system connected to a plurality of satellite systems. In one or more examples, the method 300 can be considered to include a model development stage, denoted by the box 301, which can contain steps 302, and 304, and a model execution stage, denoted by the box 305, which can contain steps 306, 308, and 310.

In one or more examples, method 300 begins at step 302, wherein synthetic data samples are generated based on actual data samples of the satellite system. The synthetic data samples generated at step 302 can be generated in response to receiving a synthetic data generation pipeline from a central system. As discussed above, the central system can transmit a synthetic data generation pipeline containing executable instructions that when executed by a processor of the satellite systems will generate synthetic data samples based on actual data samples stored at the respective satellite system. Thus the synthetic data generated at step 302 can be generated by respective satellite systems upon executing a synthetic data generation pipeline.

In one or more examples, the synthetic data generated at step 302 does not contain any one-to-one mappings to actual data of the satellite system. This can insulate the actual data from the risk of attribution disclosure (e.g., reverse-mapping a particular synthetic data record to an actual data record). When generating synthetic data at step 302, the synthetic data generation pipeline can be configured to replace any actual data samples tagged as containing PII with fake data values, which can remove the risk of identity disclosure (e.g., reverse-mapping a particular synthetic data to a particular person). In some embodiments, the pipeline may be configured such that synthetic data generation techniques handle PII information such that the synthetic data mapping will not be able to reverse engineer those values.

In some embodiments, synthetic data is generated using a machine learning algorithms that processes the entire data as a distribution and learns to create datapoints from the same distribution. For example, suppose the data contains two columns - age and height. Suppose age is between 0 and 100 and height is between 0 and 8 feet. A random generator will randomly output numbers in these ranges. But a synthetic data generation algorithm may process the real data and determine that not all combinations of age and height are reasonable, for example by concluding that there is some correlation. That is, algorithm may determine that the data lies in a smaller subspace of the [0, 100] x [0, 8] range, and the synthetic data generation algorithm may learn to find points based on the distribution within that range.

Regarding the manner in which the pipeline may handle PII information such that the synthetic data mapping will not be able to reverse engineer those values, consider further the following example. Suppose the data had an additional column called name which included PII. If a sufficient number of synthetic data samples are generated, then there is a possibility that original training data values may appear in the synthetic data. This may be because not all synthetic data generation techniques include configurations to actively try to avoid real values. Thus, in some embodiments, in order to prevent its reverse engineering, the pipeline may be configured to drop the "name" column when feeding data into the synthetic data generation algorithm, and to thereby handle the PII column differently. In some embodiments, the pipeline may replace all the name values with the character # and generate synthetic data for age and height. Thus the generated synthetic data would look like

```
Name, Age, Height
#, 25, 6
#, 40, 5.5
#, 80, 5.2
```

After generating synthetic data at step 302, the method 300 can move to step 304, wherein the synthetic data samples are transmitted to the central system. By transmitting only synthetic data and not actual data to the central system, the method 300 preserves the privacy of the actual data stored at the satellite systems. By transmitting synthetic data that can be used by a data scientist for valuable data exploration analytics during the model development stage, method 300 nonetheless facilitates federated machine learning while preserving the privacy of the actual data.

As noted above, a data alignment algorithm may be necessary when performing federated machine learning using satellite systems that do not store data according to a uniform schema. Thus, in one or more examples, the model development stage 301 of method 300 can include steps corresponding to a data alignment algorithm executed by the central system. For instance, when performing a data alignment algorithm to perform vertical federated learning, the method 300 can include receiving an encryption pipeline from the central system that comprises instructions that when executed cause respective satellite systems to generate a plurality of encrypted data samples based on actual data samples of the satellite system and to transmit those encrypted data samples to the central system. The satellite system may store a reverse mapping of the encrypted data samples transmitted to the central system. In one or more examples, any columns designated as containing PII are encrypted using a satellite specific nonce, which provides strong cryptographic privacy to protect PII while executing the encryption pipeline.

Upon completing the model development stage (e.g., upon transmitting synthetic data to the central system at step 304), the method 300 can move to step 306, wherein a central machine learning model is received from the central system. The central machine learning model can be received in the form of a machine learning pipeline that includes executable instructions that when executed by the satellite system (such as via a processor of the system) cause the satellite system to train the model using actual data of the satellite system. As noted above, the machine learning pipeline can include a preprocessing run with processing rules that may be implemented upon executing the machine learning pipeline.

Upon executing a machine learning pipeline received from the central system, the method 300 can move to step 308, wherein the central machine learning model is trained using actual data samples of the satellite system to generate a local update. In one or more examples, training the central machine learning model at respective satellite systems can be based on custom privacy specifications of that respective satellite system. For instance, if a user of the satellite system specifies an anonymity parameter with a minimum sample size for all job runs, the processor of the satellite system can ensure that no job run is over a sample size smaller than the specified anonymity parameter. Accordingly, when training the central machine learning model at step 308 (and/or when executing any pipeline received from the central system), the processor of the satellite system may train the central machine learning model in accordance with local privacy specifications of the satellite system. In one or more examples, an asymmetric learning algorithm may be applied when training the central machine learning model at step 308. The techniques described above at paragraphs [0076]-[0079] provide one example of an asymmetric learning algorithm. The central machine learning model applied at step 308 may be symmetric because it is an example of horizontal federated learning, so the same model is trained across all satellite systems (symmetric). In vertical federated learning, different learning algorithms may be trained at different satellites (asymmetric).

After generating the local update at step 308, the method 300 can move to step 310, wherein the local update is transmitted to the central system. The information (e.g., the transformed data) transmitted with the local update at step 308 is distinct from the actual data values of the satellite system. Thus, at no point during method 300 does a respective satellite system transmit the actual data values of the local database to the central system. By bringing the executable code (e.g., the pipelines) of the central system to the data instead of bringing the data to the central system, the method 300 restricts access to the actual data and preserves the privacy of the data. In one or more examples, differential privacy can be used to further mask the output of jobs implemented to increase the privacy-preservation safeguards.

As noted above, when receiving a job from the central system (such as any of the pipelines discussed above), the satellite systems can ensure that the job has been validated by the central system and refuse to execute a job that is not validated by the central system. Thus, any information transmitted from the satellite systems to the central system can only be the output of a valid job. Therefore any information logged by a server of the satellite systems and a server of the central system will be the output of a valid job.

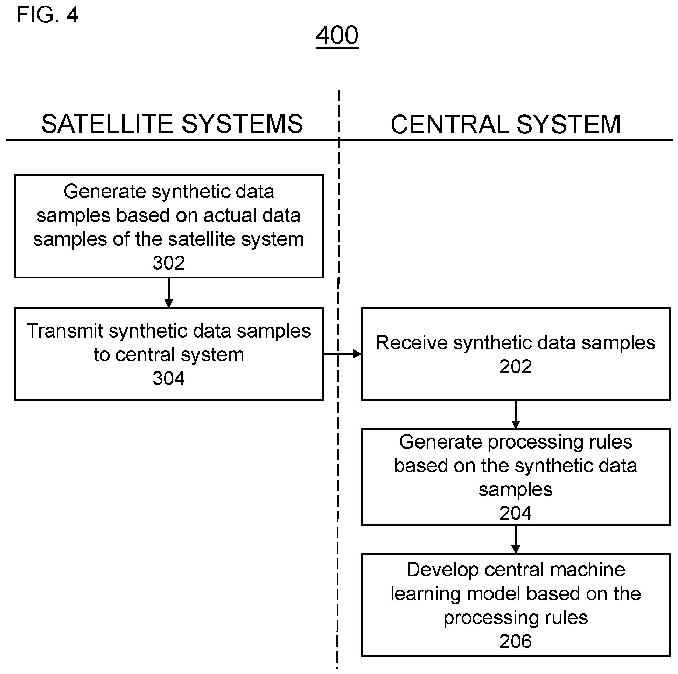

**FIG. 4** depicts an exemplary method 400 for developing a central federated machine learning model, in accordance with one or more examples of the present disclosure. Method 400 can be performed by a system for federated machine learning, such as the system 100 of FIG. 1, that includes a central system connected to a plurality of satellite systems. Method 400 indicates an order in which the model development stage of method 200 (e.g., the steps contained within box 201) and the model development stage of method 300 (e.g., the steps contained within box 301) can be performed collectively as a combined method for developing a central federated machine learning model.

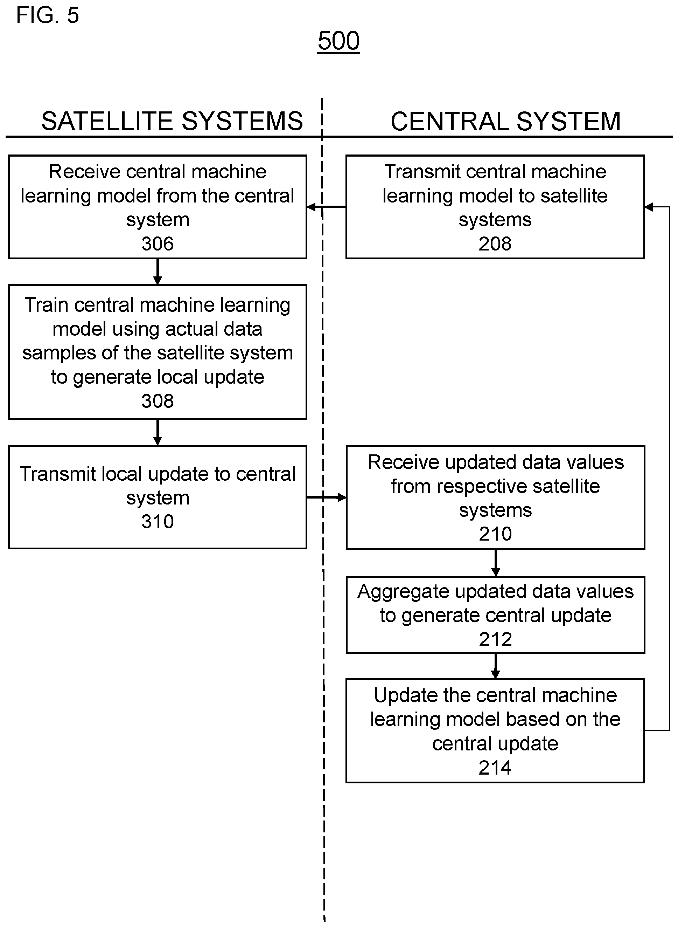

**FIG. 5** depicts an exemplary method 500 for executing a central federated machine learning model at remote satellite systems, in accordance with one or more examples of the present disclosure. Method 500 can be performed by a system for federated machine learning, such as the system 100 of FIG. 1, that includes a central system connected to a plurality of satellite systems. Method 500 indicates an order in which the model execution stage of method 200 (e.g., the steps contained within box 207) and the model execution stage of method 300 (e.g., the steps contained within box 305) can be performed collectively as a combined method for executing a central federated machine learning model.

## Computing Device

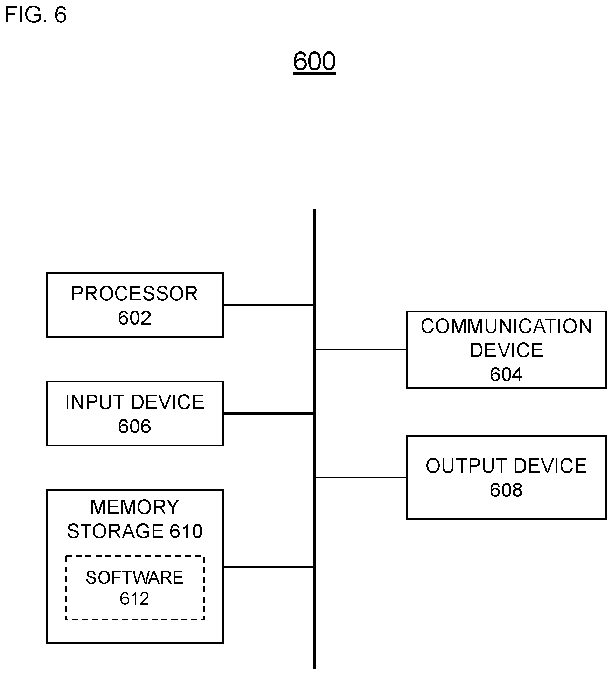

The operations described above, including those described with references to FIGS. 1-5, are optionally implemented by one or more computing systems having components depicted in FIG. 6. It would be clear to a person having ordinary skill in the art how other processes, for example, combinations or sub-combinations of all or part of the operations described above, may be implemented based on the components depicted in FIG. 6. It would also be clear to a person having ordinary skill in the art how the methods, techniques, and systems described herein may be combined with one another, in whole or in part, whether or not those methods, techniques, systems, and/or devices are implemented by and/or provided by the components depicted in FIG. 6.

**FIG. 6** depicts a computing device in accordance with some embodiments. Device 600 can be a host computer connected to a network. Device 600 can be a client computer or a server. As shown in FIG. 6, device 600 can be any suitable type of microprocessor-based device, such as a personal computer, workstation, server or handheld computing device (portable electronic device) such as a phone or tablet. The device can include, for example, one or more of processor 602, input device 606, output device 608, storage 610, and communication device 604. Input device 606 and output device 608 can generally correspond to those described above, and can either be connectable or integrated with the computer.

Input device 606 can be any suitable device that provides input, such as a touch screen, keyboard or keypad, mouse, or voice-recognition device. Output device 608 can be any suitable device that provides output, such as a touch screen, haptics device, or speaker.

Storage 610 can be any suitable device that provides storage, such as an electrical, magnetic or optical memory including a RAM, cache, hard drive, or removable storage disk. Communication device 604 can include any suitable device capable of transmitting and receiving signals over a network, such as a network interface chip or device. The components of the computer can be connected in any suitable manner, such as via a physical bus or wirelessly.

Software 612, which can be stored in storage 610 and executed by processor 602, can include, for example, the programming that embodies the functionality of the present disclosure (e.g., as embodied in the devices as described above).

Software 612 can also be stored and/or transported within any non-transitory computer-readable storage medium for use by or in connection with an instruction execution system, apparatus, or device, such as those described above, that can fetch instructions associated with the software from the instruction execution system, apparatus, or device and execute the instructions. In the context of this disclosure, a computer-readable storage medium can be any medium, such as storage 610, that can contain or store programming for use by or in connection with an instruction execution system, apparatus, or device.

Software 612 can also be propagated within any transport medium for use by or in connection with an instruction execution system, apparatus, or device, such as those described above, that can fetch instructions associated with the software from the instruction execution system, apparatus, or device, and execute the instructions. In the context of this disclosure, a transport medium can be any medium that can communicate, propagate or transport programming for use by or in connection with an instruction execution system, apparatus, or device. The transport readable medium can include, but is not limited to, an electronic, magnetic, optical, electromagnetic or infrared wired or wireless propagation medium.

Device 600 may be connected to a network, which can be any suitable type of interconnected communication system. The network can implement any suitable communications protocol and can be secured by any suitable security protocol. The network can comprise network links of any suitable arrangement that can implement the transmission and reception of network signals, such as wireless network connections, T1 or T3 lines, cable networks, DSL, or telephone lines.

Device 600 can implement any operating system suitable for operating on the network. Software 612 can be written in any suitable programming language, such as C, C++, Java, or Python. In various embodiments, application software embodying the functionality of the present disclosure can be deployed in different configurations, such as in client/server arrangement or through a Web browser as a Web-based application or Web service, for example.

Following is a listing of exemplary enumerated embodiments, which may be combined in whole or in part with one another and/or with any other disclosures herein:

1. A computer-implemented method for developing a central machine learning model, the method performed by a central system communicatively coupled to a plurality of satellite systems, the method comprising:

receiving, at the central system, a plurality of synthetic data samples from respective satellite systems of the plurality of satellite systems, wherein each of the plurality of synthetic data samples is based on an actual data sample of the respective satellite system;

generating one or more processing rules based on the synthetic data samples; and

developing a central machine learning model based on the one or more processing rules.

2. The method of embodiment 1, comprising:

transmitting the central machine learning model to the plurality of satellite systems;

receiving a plurality of updated data values from respective satellite systems of the plurality of satellite systems, wherein the plurality of updated data values were generated from training the central machine learning model using the actual data samples of the plurality of satellite systems;

aggregating the plurality of updated data values to generate a central update; and

updating the central machine learning model based on the central update.

3. The method of embodiment 2, wherein aggregating the plurality of updated data values comprises applying one or more federated averaging algorithms to the updated data values.

4. The method of any of embodiments 2-3, comprising training the updated central machine learning model on a testing data set of the central system.

5. The method of any of embodiments 1-4, wherein the plurality of satellite systems store actual data samples according to a uniform data schema.

6. The method of any of embodiments 1-5, wherein the plurality of satellite systems store data samples according to different data schemas.

7. The method of embodiment 6, comprising:

transmitting an encryption pipeline to the plurality of satellite systems;

receiving, at the central system, a plurality of encrypted data samples from respective satellite systems of the plurality of satellite systems, wherein each of the plurality of encrypted data values was encrypted by the respective satellite system in accordance with the encryption pipeline;

applying a transformation to each of the plurality of encrypted data samples to generate a plurality of transformed data samples;

identifying one or more entities of a particular type in the plurality of transformed data samples;

generating a set of location indices based on the identified one or more entities of the particular type; and

developing the central machine learning model based on the generated set of location indices.

8. The method of embodiment 7, wherein applying the transformation to each of the plurality of encrypted data samples comprises:

obtaining a unique transformation key corresponding to respective satellite systems of the plurality of satellite systems; and

applying the unique transformation key corresponding to the respective satellite system to encrypted data samples of the respective satellite system.

9. The method of any of embodiments 7-8, comprising transmitting a synthetic data generation pipeline to the plurality of satellite systems, wherein the synthetic data generation pipeline comprises instructions for respective satellite systems of the plurality of satellite systems to generate synthetic data samples based on actual data associated with the generated set of location indices.

10. The method of embodiment 9, wherein the instructions for respective satellite systems of the plurality of satellite systems were generated, at least in part, based on specifications of the respective satellite system.

11. The method of embodiment 10, wherein the specifications comprise one or more of a maximum number of synthetic data samples that can be generated, one or more caching mechanisms, and one or more designations of data samples that correspond to personally identifiable information (PII).

12. The method of any of embodiments 1-11, wherein the central system and each of the plurality of satellite systems comprises an independent virtual private cloud (VPC).

13. The method of any of embodiments 1-12, wherein the central system is communicatively coupled to the plurality of satellite systems via secure point-to-point communication channels.

14. The method of any of embodiments 1-13, wherein the plurality of synthetic data samples do not correspond to any actual data samples that correspond to PII.

15. A computing system for developing a central machine learning model comprising:

a central system communicatively coupled to a plurality of satellite systems; and
one or more processors coupled to one or more memory devices, wherein the one or more memory devices include instructions which when executed by the one or more processors cause the system to:

receive, at the central system, a plurality of synthetic data samples from respective satellite systems of the plurality of satellite systems, wherein each of the plurality of synthetic data samples is based on an actual data sample of the respective satellite system;

generate one or more processing rules based on the synthetic data samples; and

develop a central machine learning model based on the one or more processing rules.

16. A computer-readable medium that stores instructions that, when executed by a computing device, cause the device to:

receive, at the central system, a plurality of synthetic data samples from respective satellite systems of the plurality of satellite systems, wherein each of the plurality of synthetic data samples is based on an actual data sample of the respective satellite system;

generate one or more processing rules based on the synthetic data samples; and

develop a central machine learning model based on the one or more processing rules.

17. A computer-implemented method for training a central machine learning model locally at a satellite system that is communicatively coupled to a central system that is communicatively coupled to a plurality of satellite systems, the method comprising:

generating, at the satellite system, a plurality of synthetic data samples based on actual data samples of the satellite system;

transmitting the plurality of synthetic data samples to the central system;

receiving, from the central system, a central machine learning model, wherein the central machine learning model is generated based at least in part on the plurality of synthetic data samples;

training the central machine learning model using actual data samples of the satellite system to generate a local update; and

transmitting the local update to the central system.

18. The method of embodiment 17, comprising encrypting the local update before transmitting the local update to the central system.

19. The method of any of embodiments 17-18, wherein the plurality of satellite systems store data samples according to a uniform data schema.

20. The method of any of embodiments 17-19, wherein the plurality of satellite systems store data samples according to different data schemas.

21. The method of embodiment 20, comprising:

receiving, at the satellite system, an encryption pipeline from the central system, wherein the encryption pipeline comprises encryption instructions;

generating a plurality of encrypted data samples based on actual data samples of the satellite system in accordance with the encryption instructions; and

transmitting the plurality of encrypted data samples to the central system.

22. The method of embodiment 21, comprising storing, at the satellite system, a reverse mapping of the plurality of encrypted data samples.

23. The method of any of embodiments 21-22, comprising:

receiving, at the satellite system, a synthetic data generation pipeline, wherein the synthetic data generation pipeline comprises instructions to generate synthetic data samples based on data associated with a set of location indices generated, at least in part, on the plurality of encrypted data samples; and

generating the plurality of synthetic data samples in accordance with the instructions.

24. The method of embodiment 23, wherein the instructions for respective satellite systems of the plurality of satellite systems were generated, at least in part, based on specifications of the respective satellite system.

25. The method of embodiment 24, wherein the specifications comprise one or more of a maximum number of synthetic data samples that can be generated, one or more caching mechanisms, and one or more designations of data samples that correspond to personally identifiable information (PII).

26. The method of any of embodiments 17-25, wherein the central system and each of the plurality of satellite systems comprises an independent virtual private cloud (VPC).

27. The method of any of embodiments 17-26, wherein the central system is communicatively coupled to the plurality of satellite systems via secure point-to-point communication channels.

28. The method of any of embodiments 17-27, wherein the plurality of synthetic data samples do not correspond to any actual data samples that correspond to PII.

29. A computing system for federated machine learning comprising:

a satellite system that is communicatively coupled to a central system that is communicatively coupled to a plurality of satellite systems; and

one or more processors coupled to one or more memory devices, wherein the one or more memory devices include instructions which when executed by the one or more processors cause the system to:

generate, at the satellite system, a plurality of synthetic data samples based on actual data samples of the satellite system;

transmit the plurality of synthetic data samples to the central system;

receive, from the central system, a central machine learning model, wherein the central machine learning model is generated based at least in part on the plurality of synthetic data samples;

train the central machine learning model using actual data samples of the satellite system to generate a local update; and

transmit the local update to the central system.

30. A non-transitory computer-readable medium storing instructions that, when executed by one or more processors of a system comprising a satellite system that is communicatively coupled to a central system that is communicatively coupled to a plurality of satellite systems, cause the system to:

generate, at the satellite system, a plurality of synthetic data samples based on actual data samples of the satellite system;

transmit the plurality of synthetic data samples to the central system;

receive, from the central system, a central machine learning model, wherein the central machine learning model is generated based at least in part on the plurality of synthetic data samples;

train the central machine learning model using actual data samples of the satellite system to generate a local update; and

transmit the local update to the central system.

31. A computer-implemented method for developing a central machine learning model, the method performed by a central system communicatively coupled to a plurality of satellite systems, the method comprising:

receiving, at the central system, a plurality of feature maps from respective satellite systems of the plurality of satellite systems, wherein each of the plurality of feature maps is generated by a corresponding locally trained neural network model of the respective satellite system;

generating a concatenated feature map by concatenating the received feature maps; and

training a central machine learning model based on the concatenated feature map.

32. A system for developing a central machine learning model, the system comprising a central system communicatively coupled to a plurality of satellite systems, the system comprising one or more processors configured to cause the system to:

receive, at the central system, a plurality of feature maps from respective satellite systems of the plurality of satellite systems, wherein each of the plurality of feature maps is generated by a corresponding locally trained neural network model of the respective satellite system;

generate a concatenated feature map by concatenating the received feature maps; and

train a central machine learning model based on the concatenated feature map.

33. A non-transitory computer-readable storage medium storing instructions for developing a central machine learning model, the instructions configured to be executed by one or more processors of a system comprising a central system communicatively coupled to a plurality of satellite systems to cause the system to:

receive, at the central system, a plurality of feature maps from respective satellite systems of the plurality of satellite systems, wherein each of the plurality of feature maps is generated by a corresponding locally trained neural network model of the respective satellite system;

generate a concatenated feature map by concatenating the received feature maps; and

train a central machine learning model based on the concatenated feature map.

34. A computer-implemented method for generating a feature map for use in training a central machine learning model, the method comprising:

training, at a satellite system that is communicatively coupled to a central system that is communicatively coupled to a plurality of satellite systems, a local neural network using a local data set that is local to the satellite system;

selecting a subset of data values from the local data set;

generating a feature map based on the selected subset of data values; and

transmitting, to the central system, the generated feature map.

35. A system for generating a feature map for use in training a central machine learning model, the system comprising one or more processors configured to cause the system to:

train, at a satellite system that is communicatively coupled to a central system that is communicatively coupled to a plurality of satellite systems, a local neural network using a local data set that is local to the satellite system;

select a subset of data values from the local data set;

generate a feature map based on the selected subset of data values; and

transmit, to the central system, the generated feature map.

36. A non-transitory computer readable storage medium storing instructions for generating a feature map for use in training a central machine learning model, the instructions configured to be executed by one or more processors of a system to cause to cause the system to:

train, at a satellite system that is communicatively coupled to a central system that is communicatively coupled to a plurality of satellite systems, a local neural network using a local data set that is local to the satellite system;

select a subset of data values from the local data set;

generate a feature map based on the selected subset of data values; and

transmit, to the central system, the generated feature map.

37. A computer-implemented method for developing a central machine learning model, the method performed by a central system communicatively coupled to a plurality of satellite systems, the method comprising:

receiving, at the central system, one or more predictions generated by a satellite system in a first subset of the plurality of satellite systems, wherein the one or more predictions are generated using a locally-trained model trained based on target variables;

receiving, at the central system, one or more encoded data values generated by a satellite system in a second subset of the plurality of satellite systems, wherein the one or more encoded data values are generated using a locally-trained encoder trained;

generating combined data by concatenating at least one or the one or more predictions and at least one of the encoded data values; and

training a central machine learning model based on the combined data.

38. A system for developing a central machine learning model, the system comprising a central system communicatively coupled to a plurality of satellite systems, the system comprising one or more processors configured to cause the system to:

receive, at the central system, one or more predictions generated by a satellite system in a first subset of the plurality of satellite systems, wherein the one or more predictions are generated using a locally-trained model trained based on target variables;

receive, at the central system, one or more encoded data values generated by a satellite system in a second subset of the plurality of satellite systems, wherein the one or more encoded data values are generated using a locally-trained encoder trained;

generate combined data by concatenating at least one or the one or more predictions and at least one of the encoded data values; and

train a central machine learning model based on the combined data.

39. A non-transitory computer-readable storage medium storing instructions for developing a central machine learning model, the instructions configured to be executed by one or more processors of a system comprising a central system communicatively coupled to a plurality of satellite systems, to cause the system to:

receive, at the central system, one or more predictions generated by a satellite system in a first subset of the plurality of satellite systems, wherein the one or more predictions are generated using a locally-trained model trained based on target variables;

receive, at the central system, one or more encoded data values generated by a satellite system in a second subset of the plurality of satellite systems, wherein the one or more encoded data values are generated using a locally-trained encoder trained;

generate combined data by concatenating at least one or the one or more predictions and at least one of the encoded data values; and

train a central machine learning model based on the combined data.

40. A computer-implemented method for generating a prediction value for use in training a central machine learning model, the method comprising:

training, at a satellite system that is communicatively coupled to a central system that is communicatively coupled to a plurality of satellite systems, a machine learning model using target variables of a first subset of the plurality of satellite systems, wherein the satellite system belongs to the first subset;

selecting a subset of data corresponding to the first subset;

generating a prediction value, based on the selected subset of data, using the trained machine learning model; and

transmitting, to the central system, the generated prediction value.

41. A system for generating a prediction value for use in training a central machine learning model, the system comprising one or more processors configured to cause the system to:

train, at a satellite system that is communicatively coupled to a central system that is communicatively coupled to a plurality of satellite systems, a machine learning model using target variables of a first subset of the plurality of satellite systems, wherein the satellite system belongs to the first subset;

select a subset of data corresponding to the first subset;

generate a prediction value, based on the selected subset of data, using the trained machine learning model; and

transmit, to the central system, the generated prediction value.

42. A non-transitory computer-readable storage medium storing instructions for generating a prediction value for use in training a central machine learning model, the instructions configured to be executed by one or more processors of a system to cause the system to:

train, at a satellite system that is communicatively coupled to a central system that is communicatively coupled to a plurality of satellite systems, a machine learning model using target variables of a first subset of the plurality of satellite systems, wherein the satellite system belongs to the first subset;

select a subset of data corresponding to the first subset;

generate a prediction value, based on the selected subset of data, using the trained machine learning model; and

transmit, to the central system, the generated prediction value.

43. A computer-implemented method for generating an encoded data value for use in training a central machine learning model, the method comprising:

training, at a satellite system that is communicatively coupled to a central system that is communicatively coupled to a plurality of satellite systems, an encoder portion of an encoder-decoder model using data corresponding to the satellite systems, wherein the satellite system belongs to a second subset of the plurality of satellite systems;

selecting a subset of data corresponding to the second subset;

generating an encoded data value, based on the selected subset of data, using the trained encoder portion; and

transmitting, to the central system, the generated encoded data value.

44. A system for generating an encoded data value for use in training a central machine learning model, the system comprising one or more processors configured to cause the system to:

train, at a satellite system that is communicatively coupled to a central system that is communicatively coupled to a plurality of satellite systems, an encoder portion of an encoder-decoder model using data corresponding to the satellite systems, wherein the satellite system belongs to a second subset of the plurality of satellite systems;

select a subset of data corresponding to the second subset;

generate an encoded data value, based on the selected subset of data, using the trained encoder portion; and

transmit, to the central system, the generated encoded data value.

45. A non-transitory computer-readable storage medium storing instructions for generating an encoded data value for use in training a central machine learning model, the instructions configured to be executed by one or more processors of a system to cause the system to:

train, at a satellite system that is communicatively coupled to a central system that is communicatively coupled to a plurality of satellite systems, an encoder portion of an encoder-decoder model using data corresponding to the satellite systems, wherein the satellite system belongs to a second subset of the plurality of satellite systems;

select a subset of data corresponding to the second subset;

generate an encoded data value, based on the selected subset of data, using the trained encoder portion; and

transmit, to the central system, the generated encoded data value.

46. A computer-implemented method for developing a central machine learning model, the method performed by a central system communicatively coupled to a plurality of satellite systems, the method comprising:

receiving, at the central system, a locally trained generative adversarial network (GAN) generated by a satellite system of the plurality of satellite systems, wherein the GAN is trained by the satellite system based on a dataset corresponding to the satellite system and based on one or more cluster labels;

generating, at the central authority, sample data using the GAN;

generating concatenated sample data, using one or more of the cluster labels, by concatenating the sample data with other sample data; and

training a central machine learning model based on the concatenated sample data.

47. A system for developing a central machine learning model, the system comprising a central system communicatively coupled to a plurality of satellite systems, the system comprising one or more processors configured to cause the system to:

receive, at the central system, a locally trained generative adversarial network (GAN) generated by a satellite system of the plurality of satellite systems, wherein the GAN is trained by the satellite system based on a dataset corresponding to the satellite system and based on one or more cluster labels;

generate, at the central authority, sample data using the GAN;

generate concatenated sample data, using one or more of the cluster labels, by concatenating the sample data with other sample data; and

train a central machine learning model based on the concatenated sample data.

48. A non-transitory computer-readable storage medium storing instructions for developing a central machine learning model, the instructions configured to be executed by one or more processors of a system comprising a central system communicatively coupled to a plurality of satellite systems, to cause the system to:

receive, at the central system, a locally trained generative adversarial network (GAN) generated by a satellite system of the plurality of satellite systems, wherein the GAN is trained by the satellite system based on a dataset corresponding to the satellite system and based on one or more cluster labels;

generate, at the central authority, sample data using the GAN;

generate concatenated sample data, using one or more of the cluster labels, by concatenating the sample data with other sample data; and

train a central machine learning model based on the concatenated sample data.

49. A computer-implemented method for generating a generative adversarial network (GAN) for use in training a central machine learning model, the method comprising:

training, at a satellite system that is communicatively coupled to a central system that is communicatively coupled to a plurality of satellite systems, a local GAN using a local data set that is local to the satellite system and using one or more cluster labels; and

transmitting, to the central system, the local GAN.

50. A system for generating a generative adversarial network (GAN) for use in training a central machine learning model, the system comprising one or more processors configured to cause the system to:

train, at a satellite system that is communicatively coupled to a central system that is communicatively coupled to a plurality of satellite systems, a local GAN using a local data set that is local to the satellite system and using one or more cluster labels; and

transmit, to the central system, the local GAN.

51. A non-transitory computer-readable storage medium storing instructions for generating a generative adversarial network (GAN) for use in training a central machine learning model, the instructions configured to be executed by one or more processors of a system to cause the system to:

train, at a satellite system that is communicatively coupled to a central system that is communicatively coupled to a plurality of satellite systems, a local GAN using a local data set that is local to the satellite system and using one or more cluster labels; and

transmit, to the central system, the local GAN.

52. A computer-implemented method for developing a central machine learning model, the method performed by a central system communicatively coupled to a plurality of satellite systems, the method comprising:

transmitting, from the central system to a first satellite system, a synthetic data generation pipeline comprising instructions to generate synthetic data samples based on actual data of the first satellite system;

receiving, from the first satellite system, synthetic data generated based on the synthetic data generation pipeline; and

transmitting a local imputer model comprising the received synthetic data from the first satellite system, from the central system to a second satellite system.

53. A system for developing a central machine learning model, the system comprising a central system communicatively coupled to a plurality of satellite systems, the system comprising one or more processors configured to cause the system to:

transmit, from the central system to a first satellite system, a synthetic data generation pipeline comprising instructions to generate synthetic data samples based on actual data of the first satellite system;

receive, from the first satellite system, synthetic data generated based on the synthetic data generation pipeline; and

transmit a local imputer model comprising the received synthetic data from the first satellite system, from the central system to a second satellite system.

54. A non-transitory computer-readable storage medium storing instructions for developing a central machine learning model, the instructions configured to be executed by one or more processors of a system comprising a central system communicatively coupled to a plurality of satellite systems, to cause the system to:

transmit, from the central system to a first satellite system, a synthetic data generation pipeline comprising instructions to generate synthetic data samples based on actual data of the first satellite system;

receive, from the first satellite system, synthetic data generated based on the synthetic data generation pipeline; and

transmit a local imputer model comprising the received synthetic data from the first satellite system, from the central system to a second satellite system.

55. A computer-implemented method for generating model data for use in training a central machine learning model, the method comprising:

receiving, at a first satellite system of a plurality of satellite systems each communicatively coupled to a central system, a plurality of imputer models trained locally at other satellite systems of the plurality of satellite systems; and

applying the other imputer models to generate features for a central machine learning model.

56. A system for generating model data for use in training a central machine learning model, the system comprising one or more processors configured to cause the system to:

receive, at a first satellite system of a plurality of satellite systems each communicatively coupled to a central system, a plurality of imputer models trained locally at other satellite systems of the plurality of satellite systems; and
apply the other imputer models to generate features for a central machine learning model.

57. A non-transitory computer-readable storage medium storing instructions for generating model data for use in training a central machine learning model, the instructions configured to be executed by one or more processors of a system to cause the system to:

receive, at a first satellite system of a plurality of satellite systems each communicatively coupled to a central system, a plurality of imputer models trained locally at other satellite systems of the plurality of satellite systems; and

apply the other imputer models to generate features for a central machine learning model.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the claims.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Alternative statements of the inventive concept are provided in the following numbered clauses:

1. A computer-implemented method for developing a central machine learning model, the method performed by a central system communicatively coupled to a plurality of satellite systems, the method comprising:

receiving, at the central system, a plurality of synthetic data samples from respective satellite systems of the plurality of satellite systems, wherein each of the plurality of synthetic data samples is based on an actual data sample of the respective satellite system;
generating one or more processing rules based on the synthetic data samples; and
developing a central machine learning model based on the one or more processing rules.

2. The method of clause 1, comprising:

transmitting the central machine learning model to the plurality of satellite systems;
receiving a plurality of updated data values from respective satellite systems of the plurality of satellite systems, wherein the plurality of updated data values were generated from training the central machine learning model using the actual data samples of the plurality of satellite systems;
aggregating the plurality of updated data values to generate a central update; and
updating the central machine learning model based on the central update.

3. The method of clause 2, wherein aggregating the plurality of updated data values comprises applying one or more federated averaging algorithms to the updated data values.

4. The method of any of clauses 2-3, comprising training the updated central machine learning model on a testing data set of the central system.

5. The method of any of clauses 1-4, wherein the plurality of satellite systems store actual data samples according to a uniform data schema.

6. The method of any of clauses 1-5, wherein the plurality of satellite systems store data samples according to different data schemas.

7. The method of clause 6, comprising:

transmitting an encryption pipeline to the plurality of satellite systems;
receiving, at the central system, a plurality of encrypted data samples from respective satellite systems of the plurality of satellite systems, wherein each of the plurality of encrypted data values was encrypted by the respective satellite system in accordance with the encryption pipeline;
applying a transformation to each of the plurality of encrypted data samples to generate a plurality of transformed data samples;
identifying one or more entities of a particular type in the plurality of transformed data samples;
generating a set of location indices based on the identified one or more entities of the particular type; and
developing the central machine learning model based on the generated set of location indices.

8. The method of clause 7, wherein applying the transformation to each of the plurality of encrypted data samples comprises:

obtaining a unique transformation key corresponding to respective satellite systems of the plurality of satellite systems; and
applying the unique transformation key corresponding to the respective satellite system to encrypted data samples of the respective satellite system.

9. The method of any of clauses 7-8, comprising transmitting a synthetic data generation pipeline to the plurality of satellite systems, wherein the synthetic data generation pipeline comprises instructions for respective satellite systems of the plurality of satellite systems to generate synthetic data samples based on actual data associated with the generated set of location indices.

10. The method of clause 9, wherein the instructions for respective satellite systems of the plurality of satellite systems were generated, at least in part, based on specifications of the respective satellite system.

11. The method of clause 10, wherein the specifications comprise one or more of a maximum number of synthetic data samples that can be generated, one or more caching mechanisms, and one or more designations of data samples that correspond to personally identifiable information (PII).

12. The method of any of clauses 1-11, wherein the central system and each of the plurality of satellite systems comprises an independent virtual private cloud (VPC).

13. The method of any of clauses 1-12, wherein the central system is communicatively coupled to the plurality of satellite systems via secure point-to-point communication channels.

14. The method of any of clauses 1-13, wherein the plurality of synthetic data samples do not correspond to any actual data samples that correspond to PII.

15. A computing system for developing a central machine learning model comprising:

a central system communicatively coupled to a plurality of satellite systems; and

one or more processors coupled to one or more memory devices, wherein the one or more memory devices include instructions which when executed by the one or more processors cause the system to:

receive, at the central system, a plurality of synthetic data samples from respective satellite systems of the plurality of satellite systems, wherein each of the plurality of synthetic data samples is based on an actual data sample of the respective satellite system;

generate one or more processing rules based on the synthetic data samples; and

develop a central machine learning model based on the one or more processing rules.

16. A non-transitory computer-readable storage medium storing instructions that, when executed by one or more processors of a system comprising a central system communicatively coupled to a plurality of satellite systems, cause the system to:

receive, at the central system, a plurality of synthetic data samples from respective satellite systems of the plurality of satellite systems, wherein each of the plurality of synthetic data samples is based on an actual data sample of the respective satellite system;

generate one or more processing rules based on the synthetic data samples; and

develop a central machine learning model based on the one or more processing rules.

17. A computer-implemented method for training a central machine learning model locally at a satellite system that is communicatively coupled to a central system that is communicatively coupled to a plurality of satellite systems, the method comprising:

generating, at the satellite system, a plurality of synthetic data samples based on actual data samples of the satellite system;

transmitting the plurality of synthetic data samples to the central system;

receiving, from the central system, a central machine learning model, wherein the central machine learning model is generated based at least in part on the plurality of synthetic data samples;

training the central machine learning model using actual data samples of the satellite system to generate a local update; and

transmitting the local update to the central system.

18. The method of clause 17, comprising encrypting the local update before transmitting the local update to the central system.

19. The method of any of clauses 17-18, wherein the plurality of satellite systems store data samples according to a uniform data schema.

20. The method of any of clauses 17-19, wherein the plurality of satellite systems store data samples according to different data schemas.

21. The method of clause 20, comprising:

receiving, at the satellite system, an encryption pipeline from the central system, wherein the encryption pipeline comprises encryption instructions;

generating a plurality of encrypted data samples based on actual data samples of the satellite system in accordance with the encryption instructions; and

transmitting the plurality of encrypted data samples to the central system.

22. The method of clause 21, comprising storing, at the satellite system, a reverse mapping of the plurality of encrypted data samples.

23. The method of any of clauses 21-22, comprising:

receiving, at the satellite system, a synthetic data generation pipeline, wherein the synthetic data generation pipeline comprises instructions to generate synthetic data samples based on data associated with a set of location indices generated, at least in part, on the plurality of encrypted data samples; and

generating the plurality of synthetic data samples in accordance with the instructions.

24. The method of clause 23, wherein the instructions for respective satellite systems of the plurality of satellite systems were generated, at least in part, based on specifications of the respective satellite system.

25. The method of clause 24, wherein the specifications comprise one or more of a maximum number of synthetic data samples that can be generated, one or more caching mechanisms, and one or more designations of data samples that correspond to personally identifiable information (PII).

26. The method of any of clauses 17-25, wherein the central system and each of the plurality of satellite systems comprises an independent virtual private cloud (VPC).

27. The method of any of clauses 17-26, wherein the central system is communicatively coupled to the plurality of satellite systems via secure point-to-point communication channels.

28. The method of any of clauses 17-27, wherein the plurality of synthetic data samples do not correspond to any actual data samples that correspond to PII.

29. A computing system for federated machine learning comprising:

a satellite system that is communicatively coupled to a central system that is communicatively coupled to a plurality of satellite systems; and one or more processors coupled to one or more memory devices, wherein the one or more memory devices include instructions which when executed by the one or more processors cause the system to:

generate, at the satellite system, a plurality of synthetic data samples based on actual data samples of the satellite system; transmit the plurality of synthetic data samples to the central system; receive, from the central system, a central machine learning model, wherein the central machine learning model is generated based at least in part on the plurality of synthetic data samples; train the central machine learning model using actual data samples of the satellite system to generate a local update; and transmit the local update to the central system.

30. A non-transitory computer-readable storage medium storing instructions that, when executed by one or more processors a system comprising a satellite system that is communicatively coupled to a central system that is communicatively coupled to a plurality of satellite systems, cause the system to:

generate, at the satellite system, a plurality of synthetic data samples based on actual data samples of the satellite system; transmit the plurality of synthetic data samples to the central system; receive, from the central system, a central machine learning model, wherein the central machine learning model is generated based at least in part on the plurality of synthetic data samples; train the central machine learning model using actual data samples of the satellite system to generate a local update; and transmit the local update to the central system.

**Claims**

1. A computer-implemented method for developing a central machine learning model, the method performed by a central system communicatively coupled to a plurality of satellite systems, the method comprising:

receiving, at the central system, a plurality of synthetic data samples from respective satellite systems of the plurality of satellite systems, wherein each of the plurality of synthetic data samples is based on an actual data sample of the respective satellite system; generating one or more processing rules based on the synthetic data samples; and developing a central machine learning model based on the one or more processing rules.

2. The method of claim 1, comprising:

transmitting the central machine learning model to the plurality of satellite systems; receiving a plurality of updated data values from respective satellite systems of the plurality of satellite systems, wherein the plurality of updated data values were generated from training the central machine learning model using the actual data samples of the plurality of satellite systems; aggregating the plurality of updated data values to generate a central update, optionally wherein aggregating the plurality of updated data values comprises applying one or more federated averaging algorithms to the updated data values; and updating the central machine learning model based on the central update, and optionally comprising training the updated central machine learning model on a testing data set of the central system.

3. The method of any of claims 1-2, wherein the plurality of satellite systems store actual data samples according to a uniform data schema, and/or wherein the plurality of satellite systems store data samples according to different data schemas.

4. The method of claim 3, comprising:

transmitting an encryption pipeline to the plurality of satellite systems; receiving, at the central system, a plurality of encrypted data samples from respective satellite systems of the plurality of satellite systems, wherein each of the plurality of encrypted data values was encrypted by the respective satellite system in accordance with the encryption pipeline; applying a transformation to each of the plurality of encrypted data samples to generate a plurality of transformed data samples; identifying one or more entities of a particular type in the plurality of transformed data samples; generating a set of location indices based on the identified one or more entities of the particular type; and

developing the central machine learning model based on the generated set of location indices, optionally wherein applying the transformation to each of the plurality of encrypted data samples comprises:

obtaining a unique transformation key corresponding to respective satellite systems of the plurality of satellite systems; and
applying the unique transformation key corresponding to the respective satellite system to encrypted data samples of the respective satellite system.

5. The method of claim 4, comprising transmitting a synthetic data generation pipeline to the plurality of satellite systems, wherein the synthetic data generation pipeline comprises instructions for respective satellite systems of the plurality of satellite systems to generate synthetic data samples based on actual data associated with the generated set of location indices.

6. The method of claim 5, wherein the instructions for respective satellite systems of the plurality of satellite systems were generated, at least in part, based on specifications of the respective satellite system, optionally wherein the specifications comprise one or more of a maximum number of synthetic data samples that can be generated, one or more caching mechanisms, and one or more designations of data samples that correspond to personally identifiable information (PII).

7. The method of any of claims 1-6, wherein the central system and each of the plurality of satellite systems comprises an independent virtual private cloud (VPC), and/or wherein the central system is communicatively coupled to the plurality of satellite systems via secure point-to-point communication channels, and/or wherein the plurality of synthetic data samples do not correspond to any actual data samples that correspond to PII.

8. A computing system for developing a central machine learning model comprising:

a central system communicatively coupled to a plurality of satellite systems; and
one or more processors coupled to one or more memory devices, wherein the one or more memory devices include instructions which when executed by the one or more processors cause the system to perform the method of any of claims 1 to 7.

9. A non-transitory computer-readable storage medium storing instructions that, when executed by one or more processors of a system comprising a central system communicatively coupled to a plurality of satellite systems, cause the system to perform the method of any of claims 1 to 7.

10. A computer-implemented method for training a central machine learning model locally at a satellite system that is communicatively coupled to a central system that is communicatively coupled to a plurality of satellite systems, the method comprising:

generating, at the satellite system, a plurality of synthetic data samples based on actual data samples of the satellite system;
transmitting the plurality of synthetic data samples to the central system;
receiving, from the central system, a central machine learning model, wherein the central machine learning model is generated based at least in part on the plurality of synthetic data samples;
training the central machine learning model using actual data samples of the satellite system to generate a local update; and
transmitting the local update to the central system.

11. The method of claim 10, comprising encrypting the local update before transmitting the local update to the central system.

12. The method of any of claims 10-11, wherein the plurality of satellite systems store data samples according to a uniform data schema, and/or wherein the plurality of satellite systems store data samples according to different data schemas.

13. The method of claim 12, comprising:

receiving, at the satellite system, an encryption pipeline from the central system, wherein the encryption pipeline comprises encryption instructions;
generating a plurality of encrypted data samples based on actual data samples of the satellite system in accordance with the encryption instructions; and
transmitting the plurality of encrypted data samples to the central system, and optionally comprising storing, at the satellite system, a reverse mapping of the plurality of encrypted data samples.

14. The method of claim 13, comprising:

receiving, at the satellite system, a synthetic data generation pipeline, wherein the synthetic data generation pipeline comprises instructions to generate synthetic data samples based on data associated with a set of location indices generated, at least in part, on the plurality of encrypted data samples; and

generating the plurality of synthetic data samples in accordance with the instructions.

15. The method of claim 14, wherein the instructions for respective satellite systems of the plurality of satellite systems were generated, at least in part, based on specifications of the respective satellite system, optionally wherein the specifications comprise one or more of a maximum number of synthetic data samples that can be generated, one or more caching mechanisms, and one or more designations of data samples that correspond to personally identifiable information (PII).

16. The method of any of claims 10-15, wherein the central system and each of the plurality of satellite systems comprises an independent virtual private cloud (VPC), and/or wherein the central system is communicatively coupled to the plurality of satellite systems via secure point-to-point communication channels, and/or wherein the plurality of synthetic data samples do not correspond to any actual data samples that correspond to PII.

17. A computing system for federated machine learning comprising:

a satellite system that is communicatively coupled to a central system that is communicatively coupled to a plurality of satellite systems; and one or more processors coupled to one or more memory devices, wherein the one or more memory devices include instructions which when executed by the one or more processors cause the system to perform the method of any of claims 10 to 16.

18. A non-transitory computer-readable storage medium storing instructions that, when executed by one or more processors a system comprising a satellite system that is communicatively coupled to a central system that is communicatively coupled to a plurality of satellite systems, cause the system to perform the method of any of claims 10 to 16.

FIG. 1

FIG. 2                    200

Receive plurality of synthetic data samples from respective
satellite systems
202

Generate one or more processing rules based on synthetic
data samples
204

Develop central machine learning model based on the one
or more processing rules
206

201

207

Transmit central machine learning model to the plurality of
satellite systems
208

Receive plurality of updated data values from respective
satellite systems
210

Aggregate plurality of updated data values to generate
central update
212

Update central machine learning model based on central
update
214

FIG. 3

300

Generate synthetic data samples based on actual data
samples of the satellite system
302

301

Transmit synthetic data samples to central system
304

305

Receive central machine learning model from the central
system
306

Train central machine learning model using actual data
samples of the satellite system to generate local update
308

Transmit local update to central system
310

FIG. 4

400

| SATELLITE SYSTEMS | CENTRAL SYSTEM |

Generate synthetic data samples based on actual data samples of the satellite system
302

↓

Transmit synthetic data samples to central system
304

→

Receive synthetic data samples
202

↓

Generate processing rules based on the synthetic data samples
204

↓

Develop central machine learning model based on the processing rules
206

FIG. 5

500

| SATELLITE SYSTEMS | CENTRAL SYSTEM |
|---|---|

Receive central machine learning model from the central system
306

Transmit central machine learning model to satellite systems
208

Train central machine learning model using actual data samples of the satellite system to generate local update
308

Transmit local update to central system
310

Receive updated data values from respective satellite systems
210

Aggregate updated data values to generate central update
212

Update the central machine learning model based on the central update
214

FIG. 6

600

PROCESSOR
602

INPUT DEVICE
606

MEMORY
STORAGE 610

SOFTWARE
612

COMMUNICATION
DEVICE
604

OUTPUT DEVICE
608

Europäisches
Patentamt

European
Patent Office

Office européen
des brevets

## EUROPEAN SEARCH REPORT

**Application Number**

EP 23 19 0936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Behera Monik Raj ET AL: "FedSyn: Synthetic Data Generation using Federated Learning", arXiv (Cornell University), 6 April 2022 (2022-04-06), XP093116792, Ithaca DOI: 10.48550/arxiv.2203.05931 Retrieved from the Internet: URL:https://arxiv.org/pdf/2203.05931.pdf [retrieved on 2024-01-08] * page 1 - page 8, left-hand column, paragraph 1 * ----- | 1-18 | INV. G06N20/00 G06N3/0455 ADD. G06F21/60 |
| A | WAGH SAMEER SNWAGH@GMAIL COM ET AL: "DP-cryptography", COMMUNICATIONS OF THE ACM, ASSOCIATION FOR COMPUTING MACHINERY, INC, UNITED STATES, vol. 64, no. 2, 25 January 2021 (2021-01-25), pages 84-93, XP058674734, ISSN: 0001-0782, DOI: 10.1145/3418290 * pages 84, 87 - page 92, column 2, paragraph 1 * ----- | 1-18 | |
| A | US 2021/312336 A1 (SINN MATHIEU [IE] ET AL) 7 October 2021 (2021-10-07) * claims 1-5; figures 5A,6 * ----- | 1-18 | |
| X,P | US 2022/261697 A1 (CHOPRA KARTIK [US] ET AL) 18 August 2022 (2022-08-18) * the whole document * ----- | 1-18 | |

**TECHNICAL FIELDS SEARCHED (IPC)**

G06N
G06F

The present search report has been drawn up for all claims

| Place of search | Date of completion of the search | Examiner |
|---|---|---|
| The Hague | 10 January 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 0936

10-01-2024

| Patent document cited in search report | Publication date | Patent family member(s) | Publication date |
|---|---|---|---|
| US 2021312336 A1 | 07-10-2021 | NONE | |
| US 2022261697 A1 | 18-08-2022 | EP 4292027 A1 | 20-12-2023 |
| | | US 2022261697 A1 | 18-08-2022 |
| | | WO 2022174266 A1 | 18-08-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63371334
- US 63375984
- US 19158323